(19) Europäisches Patentamt
European Patent Office
Office européen des brevets

(11) **EP 3 163 122 B1**

(12) **EUROPÄISCHE PATENTSCHRIFT**

(45) Veröffentlichungstag und Bekanntmachung des Hinweises auf die Patenterteilung:
**05.08.2026   Patentblatt 2026/32**

(21) Anmeldenummer: **16194747.8**

(22) Anmeldetag: **17.10.2013**

(51) Internationale Patentklassifikation (IPC):
***F16H 49/00*** *(2006.01)*

(52) Gemeinsame Patentklassifikation (CPC):
**F16H 49/001;** F16H 2049/003

(54) **PIN-RING FÜR EINEN HARMONIC-PIN-RING-ANTRIEB**

PIN RING FOR A HARMONIC PIN RING DRIVE

ANNEAU À BROCHES POUR DÉMULTIPLICATEUR HARMONIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **18.10.2012   PCT/IB2012/055682**

(43) Veröffentlichungstag der Anmeldung:
**03.05.2017   Patentblatt 2017/18**

(62) Dokumentnummer(n) der früheren Anmeldung(en) nach Art. 76 EPÜ:
**13826595.4 / 2 909 511**

(73) Patentinhaber: **TQ-Systems GmbH**
**82229 Seefeld (DE)**

(72) Erfinder: **ROSSBERGER, Antonius Georg**
**82404 Sindelsdo (DE)**

(74) Vertreter: **Schweiger, Martin**
**Patentanwalt**
**Martin Schweiger**
**Erhardtstraße 12**
**80469 München (DE)**

(56) Entgegenhaltungen:
**WO-A2-2010/113115     WO-A2-2012/046216**

**Beschreibung**

Die vorliegende Anmeldung beschreibt unter anderem ein neuartiges Pin-Ring-Getriebe, einen Innenring und einen Außenring für ein solches Getriebe sowie ein Zahnprofil, das für dieses Getriebe geeignet ist. Das neuartige Pin Ring Getriebe wird im Folgenden auch als "Harmonic-Pin-Ring-Drive" bezeichnet.

Aus der US 4 032 440 ist ein Getriebe bekannt, das ein flexibles endloses Zahneingriffsband aufweist, das durch eine Bewegung einer Innenverzahnung in die Zähne einer Außenverzahnung gedrückt wird, wobei die Innenverzahnung auf einem Exzenter gelagert ist. Das flexible endlose Zahneingriffsband weist Eingriffselemente auf, die als Pins ausgeformt sind.

Das Dokument WO 2012/046216 A2 offenbart ein harmonisches Pin-Ring-Getriebe mit Innenrädern und Außenrädern.

Die vorliegende Anmeldung offenbart ein Harmonic-Pin-Ring Getriebe mit mindestens einem Innenring mit Außenverzahnung und mindestens einem Außenring mit Innenverzahnung sowie mit einem Pin-Ring mit Pins, die einen kreisförmigen Querschnitt aufweisen und einen Rotor mit einem Transmitter zum Rakeln der Pins des Pin-Rings in die Zähne des Außenrings und in die Zähne des Innenrings. Der Innenring, der Rotor und der Außenring sind konzentrisch zueinander angeordnet, der Transmitter ist innerhalb des Pinrings angeordnet, und der Transmitter und der Pinring sind zwischen dem Innenring und dem Außenring angeordnet. Der Transmitter verformt den Pinring so, dass sich der Außenring und der Innenring relativ zueinander drehen. Der Pin-Ring weist einen verformbaren Pin-Haltering auf, wobei der Pin-Haltering rillenförmige Vertiefungen mit je einem Grund aufweist, der insbesondere ein kreisabschnittsförmiges Profil haben kann, wobei je ein Pin in je einen Grund lose eingesetzt ist.

Dies bedeutet insbesondere, dass die Pins in die Rillen durch eine Übergangs- oder durch eine Spielpassung eingesetzt sind.

Durch den kreisabschnittsförmigen Grund und dadurch dass die Pins lose eingesetzt sind können sich die Pins innerhalb der Rillen um ihre eigene Achse drehen, so dass Reibungsverluste und Abnutzung verringert werden. Dies steht im Gegensatz zu beispielsweise einem Pin Ring in dem die Pins fest eingefügt oder unter Spannung eingeclipst sind. Insbesondere können die Rillen so ausgeformt sein, dass sich die Pins zwischen dem Grund der Rillen und der inneren Begrenzung der Rillen auf der Innenseite des Pin-Rings radial frei bewegen können. Auf diese Weise ist es zum Beispiel leicht möglich, die Pins auszutauschen.

Insbesondere kann der Grund der Rillen so ausgeformt sein, dass der Radius des Grunds ungefähr gleich einem Radius der Pins ist und er kann so ausgeformt sein, dass der Grund ein halbkreisförmiges Profil hat.

Das Harmonic-Pin-Ring Getriebe weist einen dreireihigen Aufbau mit einem ersten Zahnrad-Paar aus Innenring und Außenring und einem zweiten Zahnrad-Paar aus Innenring und Außenring auf, wobei das erste und das zweite Zahnrad-Paar in voneinander verschiedenen ersten und zweiten Ebenen angeordnet sind, und wobei ein Transmitterträger mit einem Transmitter in einer dritten Ebene zwischen der Ebene des ersten Zahnrad-Paars und der Ebene des zweiten Zahnrad-Paars angeordnet ist. Hierbei ist der Transmitterträger ein Rotor, und der Transmitter ist gemäß einer nicht unter Anspruch 1 fallenden Ausführung ein elliptisch ausgeformter Rotorflansch, oder er ist gemäß einer unter Anspruch 1 fallenden Ausführung ein als sinusüberlagerte Kreisform ausgeformter Flansch.

Für den dreireihigen Aufbau ist die Breite des Pin-Halterings und die Länge der Pins so dimensioniert, dass die Pins an zwei gegenüberliegenden Seiten von dem Pin-Haltering hervorstehen, so dass sie in die Zahnräder der ersten und zweiten Ebene eingreifen können. Vorteilhafterweise erstreckt sich der Pin-Haltering nicht bis in den oder die Zwischenräume zwischen Innen- und Außenring sondern ist in einer Ebene angeordnet, die sich außerhalb der Ebene eines Paars von Innen- und Außenring befindet. Gemäß der vorliegenden Anmeldung ist ein Innenrad auch als Innenring zu verstehen.

Zwischen zwei benachbarten Gründen der rillenförmigen Vertiefungen können jeweils längliche Erhebungen angeordnet sein, wobei eine Höhe der länglichen Erhebungen ungefähr gleich einem Radius der Pins ist. Durch die Erhebungen werden die Pins seitlich gehalten, wobei eine radiale Bewegung der Pins durch die Höhe der Erhebungen eingeschränkt ist, wenn der Pinring auf einem flexiblen Kugellager aufliegt.

Der Pin Ring kann aus mehreren Bestandteilen gefertigt sein. Insbesondere kann der Pin-Haltering einen inneren Bereich aufweist, der die rillenförmigen Vertiefungen aufweist, und einen äußeren Bereich, der sich radial nach außen an den inneren Bereich anschließt. Für den inneren und äußeren Bereich kann dann das jeweils am besten geeignete Material gewählt werden.

Des Weiteren kann der Pin-Haltering aus zwei baugleichen Hälften zusammengesetzt sein, wobei die beiden baugleichen Hälften jeweils einen inneren Bereich und einen äußeren Bereich aufweisen können, wobei der innere Bereich die rillenförmigen Vertiefungen aufweist und wobei sich der äußere Bereich radial nach außen an den inneren Bereich anschließt.

Der Harmonic-Pin-Ring-Drive (HPRD) gemäß der vorliegenden Anmeldung ist ein spezielles, rotationssymmetrisch aufgebautes Getriebe, das sich insbesondere durch folgende Merkmale auszeichnet:

- sehr hohe Leistungsdichte, dadurch kleiner Bauraum
- Steifigkeit
- mit sehr geringem Spiel
- sehr große Bandbreite hinsichtlich Unter- bzw. Übersetzungen
- Hohlwellenbauform möglich

Diese Getriebe können sowohl einstufige als auch mehrstufige Drehzahländerungen abbilden und können als Ausgleichsgetriebe verwendet werden. Des Weiteren sind auch Drehrichtungsänderungen und Schaltungen möglich.

Der Gegenstand der Anmeldung wird untenstehend unter Bezugnahme auf die folgenden Figuren weiter erläutert.

Figur 1     zeigt eine Explosionsansicht eines HPRD Getriebes,

Figur 2     zeigt eine Aufsicht auf das Getriebe von Fig. 1,

Figur 3     zeigt einen Querschnitt durch das Getriebe von Fig.1,

Figur 4     zeigt eine Seitenansicht eines Pin-Rings und eine Ausschnittvergrößerung davon,

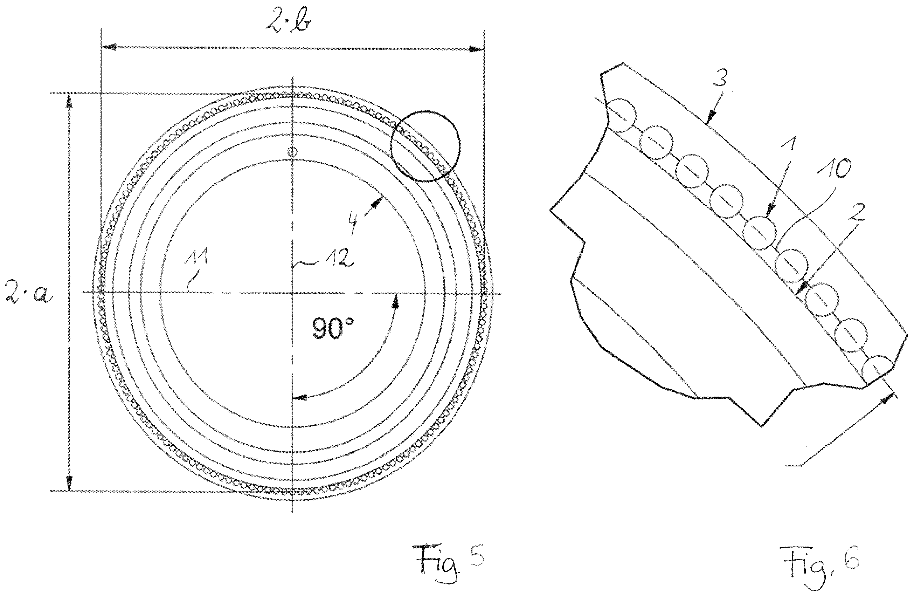

Figur 5     zeigt eine Pin-Laufbahn eines HPRD Getriebes,

Figur 6     zeigt einen vergrößerten Ausschnitt von Fig. 5,

Figur 7     zeigt eine Anordnung mit einem ersten Pin-Haltering,

Figur 8     zeigt einen Ausschnitt von Fig. 7,

Figur 9     zeigt eine Aufsicht auf den Pin-Halterring von Fig. 7 mit eingesetzten Pins,

Figur 10    zeigt eine Seitenansicht einer Hälfte des Pin-Halterings von Fig. 7,

Figur 11    zeigt eine perspektivische Ansicht der Hälfte des Pin-Halterrings von Fig. 10,

Figur 12    zeigt einen Schnitt durch die Hälfte des Pin-Halterings,

Figur 14    zeigt eine Explosionszeichnung einer Anordnung mit einem zweiten Pin-Haltering,

Figur 15    zeigt eine Seitenansicht der Anordnung von Fig. 14,

Figur 16    zeigt einen Schnitt durch die Anordnung von Fig. 14,

Figur 17    zeigt eine Seitenansicht auf den Pin-Haltering von Fig. 14,

Figur 18    zeigt eine perspektivische Ansicht des Pin-Halterings von Fig. 14, und

Figur 19    zeigt eine Ausschnittvergrößerung des Pin-Halterings von Fig. 17.

Ein Transmitter, der ein Zugmittel in ein Außenrad bzw. Außenring oder Innenrad bzw. Innenring rakelt, ist in der vorliegenden Anmeldung durch einen Flansch eines Rotors oder auch durch ein Paar von Umlenkrollen verwirklicht. Dem Außenrad entsprechen ein oder mehrere Ringe bzw. Scheiben mit einer als Innenverzahnung ausgeführten äußeren Verzahnung. Dem Innenrad entsprechen ein oder mehrere Ringe bzw. Scheiben mit einer als Außenverzahnung ausgeführten inneren Verzahnung. Dem Zugmittel entspricht ein Pinring.

Im Folgenden ist mit "Antriebsseite" die Seite gemeint, von der aus der Rotor 13 angetrieben wird und mit "Abtriebsseite" die der Antriebsseite gegenüberliegende Seite.

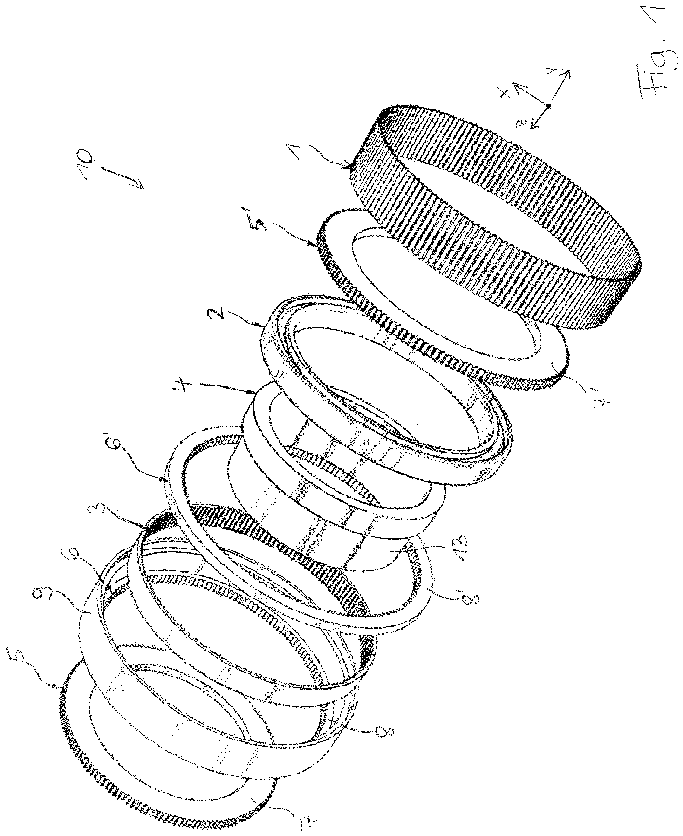

Figur 1 zeigt einen Harmonic Pin Ring Drive (HPRD) 10 gemäß der Anmeldung. Der HPRD weist einen Rotor 13 auf der über ein hier nicht gezeigtes Kugellager auf einem Gehäuse abgestützt ist. Ein Außenring 8 eines zylindrisches Gehäuseteil 9, das konzentrisch außerhalb des Rotors 13 angeordnet ist, weist eine erste als Innenverzahnung ausgeformte äußere Verzahnung 6 auf einer ersten Seite auf. Eine zweite als Innenverzahnung ausgeformte äußere

3

Verzahnung 6' ist auf einem zweiten Außenring ausgeformt, der auf einer der ersten Seite gegenüberliegenden Seite in das zylindrische Gehäuseteil 9 eingesetzt ist.

Eine als Außenverzahnung ausgeführte erste innere Verzahnung 5 ist auf einer Peripherie eines Innenrings 7 ausgeformt und konzentrisch innerhalb der ersten äußern Verzahnung 6 angeordnet. In ähnlicher Weise ist eine als Außenverzahnung ausgeführte zweite innere Verzahnung 5' auf einer Peripherie eines zweiten Innenrings 7' ausgeformt und konzentrisch innerhalb der zweiten äußeren Verzahnung 6' angeordnet

Die innere Verzahnung 5, 5' und die äußere Verzahnung 6, 6' sind konzentrisch zu einer Getriebemittelachse angeordnet, wobei die innere Verzahnung 5, 5' um die Getriebemittelachse rotierbar ist. In anderen Ausführungsbeispielen kann die äußere Verzahnung 6, 6' oder auch die äußere und die innere Verzahnung um die Getriebemittelachse rotierbar sein, je nachdem über welche Verzahnung der Abtrieb oder, bei einer Übersetzung, der Antrieb erfolgt.

Ein flexibles Dünnring-Kugellager 2 ist auf einem speziell ausgeformten Flansch 4 des Rotors 13 aufgespannt. Der Flansch kann beispielsweise als Oval oder als sinusüberlagerte Kreisform ausgeformt sein. Ein flexibler Pin-Haltering 3 ist zwischen dem flexiblen Dünnring-Kugellager 2 und der äußeren Verzahnung 6, 6' angeordnet. Der flexible Pin-Haltering 3 weist an einer Innenseite Rillen zur Aufnahme von Pins 1 auf, die auf dem Pin-Haltering 3 in gleichmäßigen Abständen angeordnet und durch den Pin-Haltering 3 starr gehalten sind.

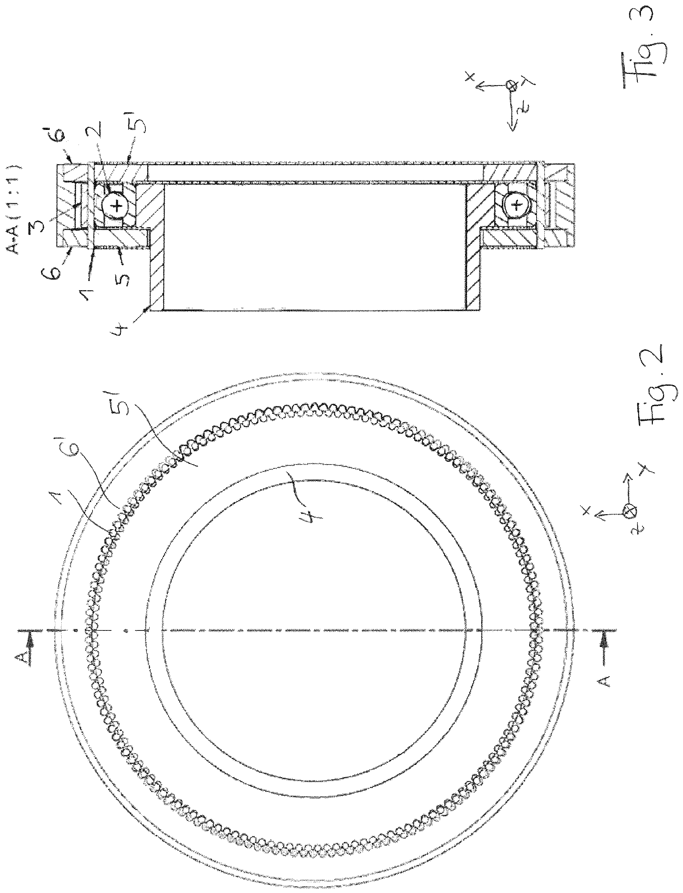

Fig. 2 zeigt eine Aufsicht auf das HPRD 10 von einer Abtriebsseite her und Fig. 3 zeigt einen Querschnitt durch den HPRD 10 entlang der Querschnittline A-A.

Die erste innere Verzahnung 5 ist durch ein Kugellager auf dem Rotor 13 abgestützt, dass der Einfachheit halber in Fig. 2 und 3 nicht gezeigt ist. Die zweite innere Verzahnung 5' ist an hier ebenfalls nicht gezeigte Abtriebsachse befestigt, die nach außen über Kugellager abgestützt ist. Die äußere Verzahnung 6, 6' ist stationär an einem hier nicht gezeigten Gehäuse befestigt.

Gemäß einer anderen Ausführungsform ist die innere Verzahnung 5, 5' stationär während die äußere Verzahnung 6, 6' einen Abtrieb bildet. Gemäß einer weiteren Ausführungsform bilden sowohl die innere Verzahnung 5, 5' als auch die äußere Verzahnung 6, 6' je einen Abtrieb.

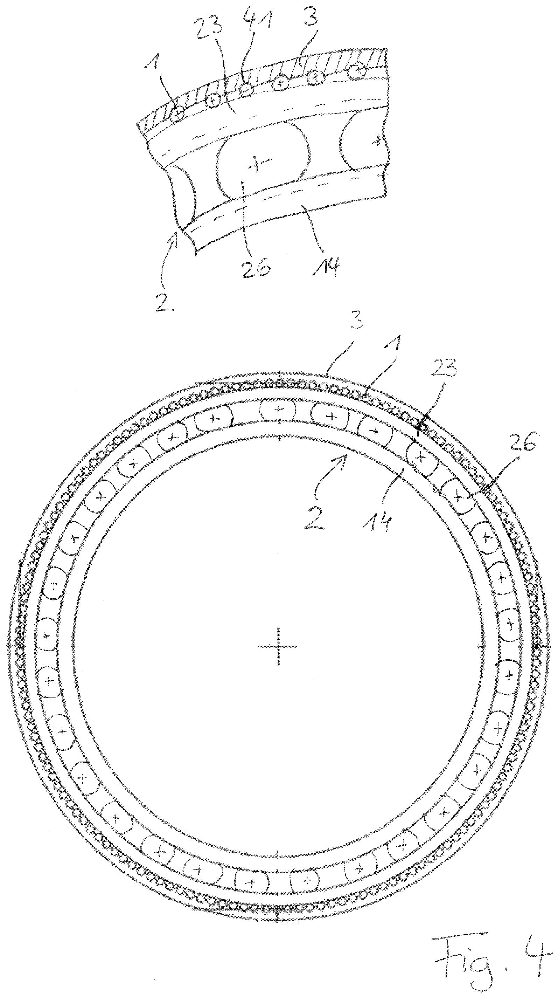

Figur 4 zeigt das flexible Kugellager 2 und den Pin-Haltering 3 mit den Pins 1. Der Pin-Haltering zusammen mit den Pins 1 wird auch als Pin-Ring bezeichnet. Das flexible Dünnring-Kugellager weist einen flexiblen Innenring 14, einen flexiblen Außenring 23 und dazwischen angeordnete Kugeln 26 auf.

Die Pins 1 sind in Aufnahmerillen 41 des Pin-Halterings 3 eingesetzt und werden durch den Anpressdruck des Pin-Halterings 3 gegen das Dünnring-Kugellager 2 festgehalten. Ein manueller Zusammenbau kann zum Beispiel so erfolgen, dass zuerst der Pin-Haltering um das Dünnring-Kugellager 2 herumgelegt wird. Anschließend werden an weit auseinanderliegenden Positionen Pins 1 eingesteckt, so dass der Abstand zwischen Dünnring-Kugellager 2 und Pin-Haltering 3 definiert wird. Anschließend werden die restlichen Pins in die Zwischenräume eingefüllt.

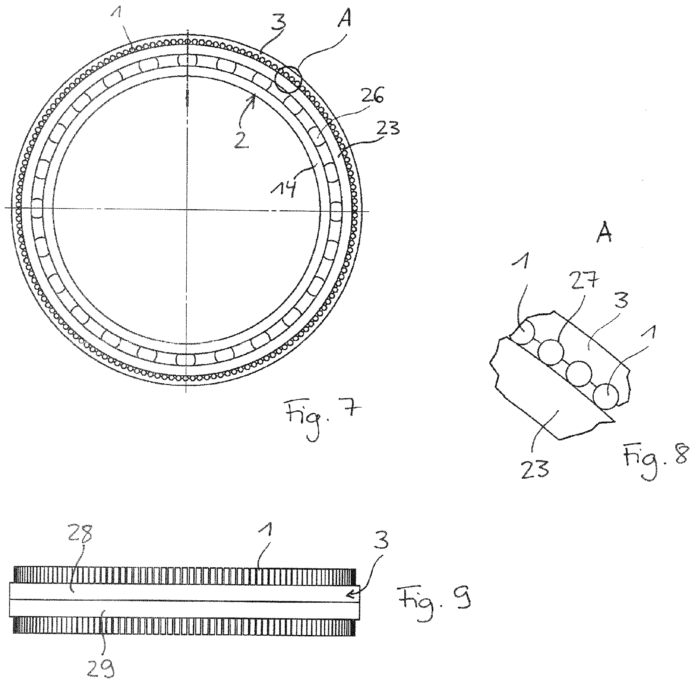

Die Figuren 7 und 8 illustrieren eine Pin-Laufbahn 10 und daraus abgeleitete Beziehungen. Von der Pin-Laufbahn 10 zu unterscheiden ist die Pintrajektorie, die die Bewegung eines einzelnen Pins in einem vorher festgelegten Bezugssystem bezeichnet. Für ein mit dem Rotor 4 mitrotierendes Bezugssystem verläuft die Pintrajektorie entlang der Pin-Laufbahn 10. In den Figuren 7 und 8 sind aus Gründen der Übersichtlichkeit die Zähnungen nicht gezeigt.

Legt man eine Bahn durch die Mittelachsen aller Pins (2), entsteht die Pin-Laufbahn 10. Diese Bahn besitzt rechtwinklig versetzt eine kleine Achse 11 der Länge 2b und eine große Achse 12 der Länge 2a. Bei einer nicht unter Anspruch 1 fallenden Ellipsenform des Transmitters ist a die Länge der kleinen Halbachse und b die Länge der großen Halbachse der Ellipse.

Die kleine Achse und die große Achse bilden die Basis der Teilkreise der Verzahnungen 5, 5' und 6, 6', wobei die kleine Achse einem Durchmesser eines Teilkreises der inneren Verzahnung 5, 5' und die große Achse einem Durchmesser eines Teilkreises der äußeren Verzahnung 6 entspricht. Bei dem HPRD verläuft der Teilkreis einer Zähnung durch die Flankenlinien, die die Zahnflanken von dem Zahngrund abgrenzen. Unter Annahme bestimmter Zahnformen der Verzahnungen 5, 5' und 6, 6' lässt sich nun die Getriebefunktion abbilden.

Hält man beispielsweise die Innenverzahnung 5, 5' stationär und dreht den Rotor 13, so entsteht eine Wellenbewegung der Anordnung der Pins 1. Daraus resultiert eine Relativbewegung der äußeren Verzahnung 6, 6', welche sich in gleicher Drehrichtung relativ zu dem Rotor 13 untersetzt dreht. Hält man die äußere Verzahnung 6, 6' stationär, dreht sich die innere Verzahnung 5, 5' entgegengesetzt und untersetzt zum Rotor 13.

Die Anzahl aller Pins 1 muss um zwei mehr als Anzahl der Zähne der inneren Verzahnung 5, 5', bzw. um zwei weniger als die Anzahl der Zähne der äußeren Verzahnung 6, 6' sein. Die Zahndifferenz der Verzahnungen 5, 5' und 6, 6' ist somit vier. Grundsätzlich wären auch Zahndifferenzen eines Vielfachen von vier möglich.

Im den folgenden Gleichungen (1) - (3) bezeichnet R die Umlaufperiode des Rotors 13, F die Umlaufperiode des Flexabtriebs 7, A die Umlaufperiode des Außenrads, I die Umlaufperiode des Innenrads, Zi die Anzahl der Zähne der Innenverzahnung 5, 5', Za die Anzahl der Zähne der äußeren Verzahnung 6, 6'. Gemäß der Gleichungen (1) - (3) sich die Drehzahluntersetzungen zwischen den einzelnen Komponenten wie folgt zusammen:

Wenn das Innenrad stationär gehalten wird, gilt

$$A/R = Za/(Za-Zi) \ bzw. \ F/R = 2*(Za/(Za-Zi)) \hspace{2cm} (1)$$

Hierbei drehen sich alle Elemente gleichläufig.

Wenn das Außenrad stationär gehalten wird, gilt

$$I/R = Zi/(Za-Zi) \ bzw. \ F/R = 2*(Zi/(Za-Zi)) \hspace{2cm} (2)$$

Hierbei drehen sich das Innenrad und der Flexring gegenläufig zum Rotor.

Wenn der Flexring stationär gehalten wird, gilt

$$A/R = 2*(Za/(Za-Zi)) \hspace{1cm} bzw. \hspace{1cm} I/R = 2*(Zi/(Za-Zi)) \ (3)$$

Hierbei drehen sich das Innenrad gegenläufig und das Außenrad gleichläufig zum Rotor.

Im Folgenden nun eine Beispielberechnung zu den möglichen Untersetzungsstufen, wobei in diesem Fall der Rotor 13 immer die Eingangsdrehzahl vorgibt. Die Zähnezahl der Innenverzahnung sei 156 und die Zähnezahl der Außenverzahnung sei 160, woraus sich die Anzahl der Pins zu 158 ergibt.

Wenn das Innenrad stationär gehalten wird, gilt

$$A/R = 160/(160-156) = 40 \ bzw. \ F/R = 2*(160/(160-156)) = 80$$

Wenn das Außenrad stationär gehalten wird, gilt

$$I/R = 156/(160-156) \ =39 \ bzw. \ F/R = 2*(156/(160-156)) = 78$$

Wenn der Flexring stationär gehalten wird, gilt

$$A/R = 2*(160/(160-156)) = 80 \ bzw. \ I/R = 2*(156/(160-156)) = 78$$

Es gibt verschiedene Möglichkeiten, die Pin-Laufbahn zu definieren. Grundsätzlich besitzt jede Pin-Laufbahn, wie oben beschrieben, jeweils rechtwinklig versetzt eine kleine Achse x und eine große Achse y, deren Verhältnis dem der Zähnezahlen der Verzahnungen 5, 5' und 6, 6' entspricht.

$$Somit \ gilt \hspace{1cm} x/y = Zi/Za$$

Des Weiteren muss die Teilung der in den Pin-Haltering 3 eingesetzten Anordnung der Pins 1 der Teilung der Verzahnungen 5, 5' und 6, 6' entsprechen. Die Pin-Laufbahn ist somit auch über ihre Bogenlänge definiert. Für die Bogenlänge s jeder beliebigen Pin-Laufbahn gilt:

$$s = Anzahl \ Pins \ 1 \ * \ Teilung$$

Der Umfang der Pin-Laufbahn abzüglich des Umfangs eines Pins 1 muss also exakt dem Umfang des Kugellagers 2 entsprechen.

Im Folgenden werden drei Laufbahnvarianten dargestellt, von welchen die zweite beansprucht ist:

1. Die Elliptische Laufbahn wird durch ihre beiden Halbachsen definiert, wobei die kleine Halbachse dem Teilkreisradius der Innenverzahnung 5, 5' und die große Halbachse dem Teilkreisradius der Außenverzahnung 6, 6' entspricht

2. Die sinusüberlagerte Kreisform ist der elliptischen Laufbahn sehr ähnlich und unterscheidet sich bei kleinen Achsunterschieden nur äußerst gering von dieser. Sie ist folgendermaßen definiert: Die Mittelachse eines kleinen Kreises mit Durchmesser gemäß dem halben Wert der Differenz aus große Achse minus kleine Achse rotiert auf der großen Kreisbahn des Mittelkreises zwischen den beiden Teilkreisen der Verzahnungen 5, 5' und 6, 6' und dreht sich dabei während eines Umlaufs um die Getriebemittelachse zweimal um seine eigene Achse. Projiziert man einen Punkt des kleinen Kreises und leitet daraus eine Bahn ab, entsteht die sinusüberlagerte Kreis-Form.

3. Die Doppelexzenter-Laufbahn ist eine Sonderform, die beispielsweise eingesetzt werden kann, wenn ein elastisches Verformen des Kugellagers 2 unerwünscht oder aufgrund eines zu großen Unterschiedes der beiden Achsen der Pin-Laufbahn nicht mehr möglich ist. In diesem Fall wird die Anordnung der Pins 1 über zwei Umlenkrollen vom Teilkreis der Innenverzahnung 5, 5' in den Teilkreis der Außenverzahnung 6, 6' gelenkt. Die Drehachsen der beiden Umlenkrollen befinden sich bezüglich einer gedachten Ellipse symmetrisch zur kleinen Achse auf der großen Achse.

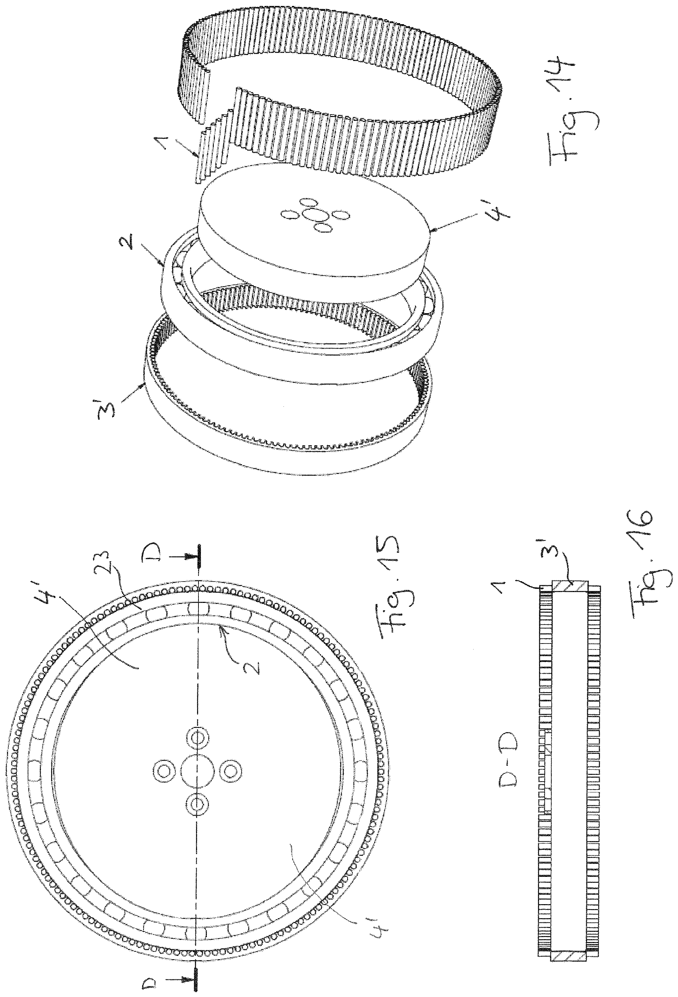

Ein erster Pin Haltering 3 gemäß der vorliegenden Anmeldung ist in den Figuren 7 bis 13 gezeigt und ein zweiter Pin-Haltering 3' gemäß der vorliegenden Anmeldung ist in den Figuren 14 bis 19 gezeigt.

Fig. 7 zeigt eine Anordnung mit einem Pin-Haltering 3, der konzentrisch außerhalb des flexiblen Kugellagers 2 angeordnet ist. Zwischen dem Pin-Haltering 3 und dem flexiblen Kugellager 2 befinden sich Pins 1, die an einer Seite auf einem Außenring 23 des flexiblen Kugellager aufliegen und auf einer gegenüberliegenden Seite in rillenförmige Vertiefungen des Pin-Halterings 3 eingesetzt sind.

Wie in der Ausschnittvergrößerung A von Fig. 8 gezeigt, haben die rillenförmigen Vertiefungen 27 des Pin-Halterings 3 ein halbkreisförmiges Profil, so dass die Pins 1 ungefähr zur Hälfte in den rillenförmigen Vertiefungen 27 aufgenommen sind. Fig. 9 zeigt eine Aufsicht auf den Pin-Halterring 3 von Fig. 7 mit eingesetzten Pins. Der Pin-Haltering 3 besteht aus einer ersten Hälfte 28 und einer dazu symmetrischen zweiten Hälfte 29, die miteinander verbunden sind, beispielsweise über Verschweißen oder Verkleben.

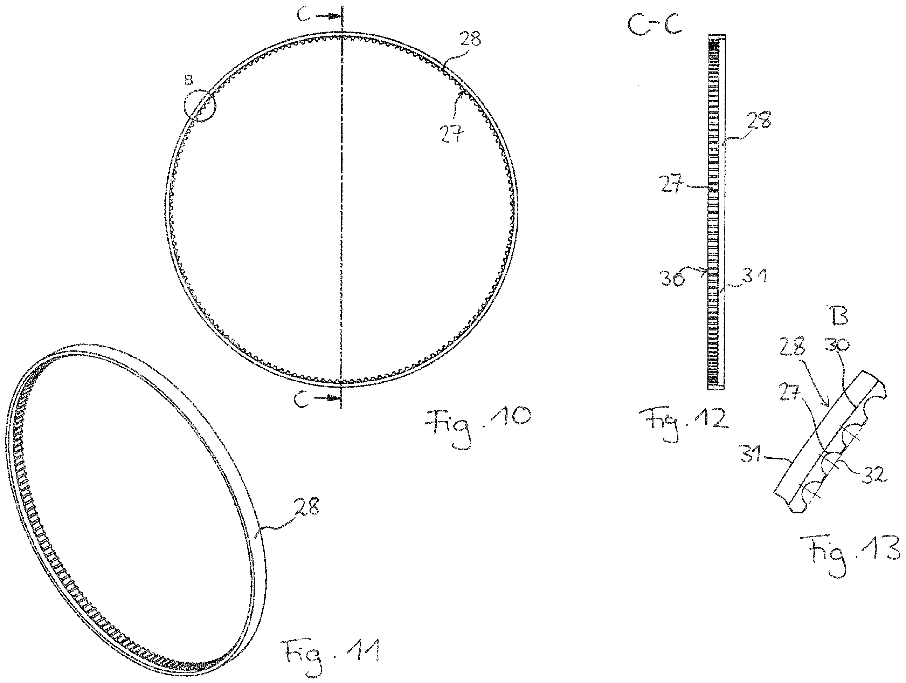

Fig. 10 zeigt eine Seitenansicht der Hälfte 28 des Pin-Halterings 3, die baugleich zur Hälfte 29 des Pin-Halterings 3 ist und Fig. 11 zeigt eine perspektivische Ansicht der Hälfte 28. Wie in der Schnittansicht C-C von Fig. 12 gezeigt, besteht die Hälfte 28 des Pin-Halterings aus einem inneren Bereich 30, der die rillenförmigen Vertiefungen 27 aufweist und einem seitlich überstehenden äußeren Bereich 31. Der innere Bereich 30 und der äußere Bereich 31 sind ebenfalls in der Ausschnittvergrößerung B in Fig. 13 gezeigt. Durch den inneren Berührkreis 32 an die halbkreisförmigen Vertiefungen 27 ist ein Teilkreis des Pin-Halterings 3 definiert. Der in Fig. 13 angedeutete Radius der halbkreisförmigen Vertiefungen 27 ist ungefähr gleich dem Radius der Pins 1.

Figur 14 zeigt eine Explosionszeichnung mit einem scheibenförmigem Transmitter 4' mit ovalem Querschnitt, einem von außen daran anschließenden flexiblen Kugellager 2, den Pins 1 und einem zweiten Pin-Haltering 3'.

Wie in Fig. 15 gezeigt liegt der zweite Pin-Haltering 3' und die Pins 1 auf dem Außenring 23 des flexiblen Kugellagers 2 auf. Das flexible Kugellager 4' ist entlang der Linie D-D geringfügig nach außen deformiert und entlang einer dazu senkrechten Linie durch den Mittelpunkt des Transmitters 4' geringfügig von dem Transmitter 4' abgehoben.

Fig. 16 zeigt einen Querschnitt D-D, wobei der Übersichtlichkeit halber die innerhalb der Pins 1 liegenden Teile weggelassen sind. Wie in Fig. 16 erkennbar ist die Dicke des Pin-Halterings 3' in radialer Richtung ungefähr gleich dem doppelten Durchmesser der Pins 1.

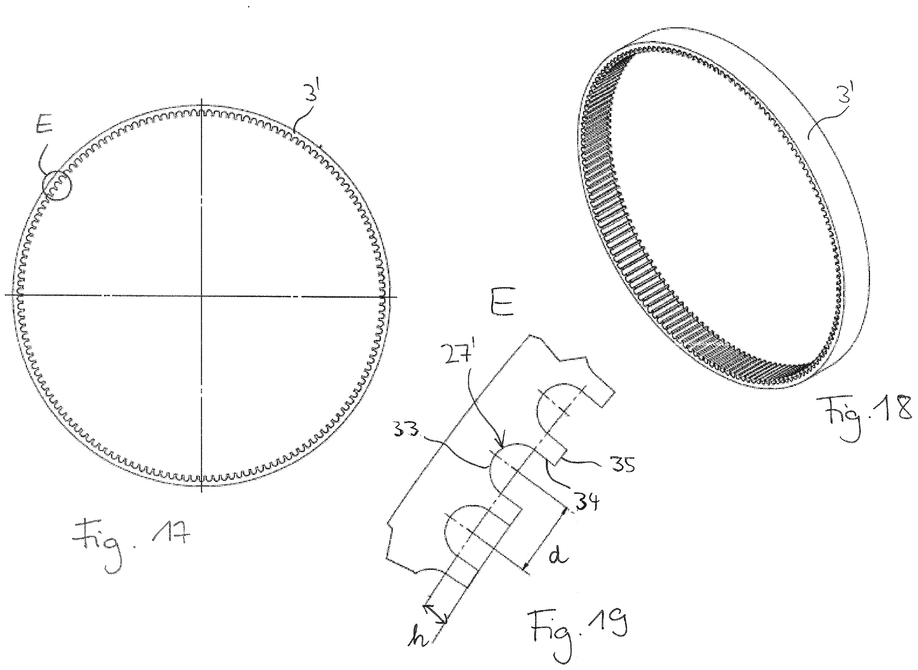

Fig. 17 zeigt eine Seitenansicht auf den Pin-Haltering 3' und Fig. 17 eine perspektivische Ansicht auf den Pin-Haltering 3'. Anders als in dem Ausführungsbeispiel der Figuren 7 - 13 besteht der Pin Haltering 3' aus einem Stück und nicht aus einem inneren und einem äußeren Bereich oder aus zwei Hälften. In einer modifizierten Ausführung kann der Pin-Haltering 3' in ähnlicher Weise wie der Pin-Haltering 3 aus einem inneren und äußeren Bereich und/oder aus zwei Hälften gefertigt sein, die miteinander verbunden sind.

Wie in Fig. 19 gezeigt, weisen die rillenförmigen Vertiefungen 27' des Pin-Halterings 3' Bereiche 33 mit halbkreisförmigen Querschnitt und daran anschließende Wände 34 auf, die durch längliche Erhebungen 34 gebildet werden, die sich von einer Seite des Pin-Halterings 3' zu einer gegenüberliegenden Seite des Pin-Halterings 3' erstrecken und sich zwischen den halbkreisförmigen Bereichen 33 befinden. Eine Höhe h der Erhebungen 34 ist ungefähr gleich oder auch geringfügig kleiner als der Radius der Pins 1. Ein Radius der halbkreisförmigen Bereiche 33 ist ungefähr gleich dem Radius der Pins 1.

**Bezugsziffern**

| | |
|---|---|
| 1 | Pins |
| 2 | Dünnring-Kugellager |
| 3 | Pin-Haltering |
| 4 | Rotor-Flansch, Transmitter |
| 5 | innere Verzahnung |
| 5' | innere Verzahnung |
| 6 | äußere Verzahnung |
| 6' | äußere Verzahnung |
| 7 | Innenring |
| 7' | Innenring |

| 8 | Außenring |
|---|---|
| 8' | Außenring |
| 9 | zylindrisches Gehäuseteil |
| 10 | HPRD Getriebe |
| 11 | kleine Achse |
| 12 | große Achse |
| 13 | Rotor |
| 14 | flexibler Innenring |
| 15 | Umlenkrolle |
| 15' | Umlenkrolle |
| 16 | Kugellager |
| 17 | Kugellager |
| 18 | Scheibe, Innenring |
| 19 | Stellschlitze |
| 20 | innerer Berührbereich |
| 21 | äußerer Berührbereich |
| 22 | Zwischenbereich |
| 23 | flexibler Außenring |
| 24 | Zahngrund |
| 25 | Pintrajektorie |
| 26 | Kugellagerkugeln |
| 27 | rillenförmige Vertiefung |
| 28 | erste Hälfte des Pin-Halterings |
| 29 | zweite Hälfte des Pin-Halterings |
| 30 | innerer Bereich des Pin-Halterings |
| 31 | äußerer Bereich des Pin-Halterings |
| 32 | Teilkreis des Pin-Halterings |
| 33 | Grund der Vertiefung |
| 34 | Wand der Vertiefung |
| 35 | längliche Erhebung |

**Patentansprüche**

1. Harmonic-Pin-Ring Getriebe (10), das aufweist

- ein erstes Zahnradpaar mit einem Innenring (7, 7') mit Außenverzahnung und einem Außenring (8, 8') mit Innenverzahnung,
- ein zweites Zahnradpaar mit einem Innenring (7, 7') mit Außenverzahnung und einem Außenring (8, 8') mit Innenverzahnung,
- einen Pin-Ring (1, 3) mit Pins (1), die einen kreisförmigen Querschnitt aufweisen,
- einen Rotor (13) mit einem Transmitter (4, 4') zum Rakeln der Pins (1) des Pin-Rings (1, 3) in die Zähne der Außenringe (8, 8') und in die Zähne der Innenringe (7, 7'),
- ein flexibles Kugellager (2), das in radialer Richtung zwischen dem Transmitter (4, 4') und dem Pinring (1, 3) angeordnet ist,
wobei bei jedem Zahnradpaar der Innenring (7, 7'), der Rotor (13) und der Außenring (8, 8') konzentrisch zueinander angeordnet sind,
wobei der Transmitter (4, 4') innerhalb des Pinrings (1, 3) angeordnet ist, wobei der Pinring (1, 3) bei jedem Zahnradpaar zwischen dem Innenring (7, 7') und dem Außenring (8, 8') angeordnet ist, wobei der Transmitter (4, 4') den Pinring (1, 3) so verformt, dass sich der Außenring (8, 8') und der Innenring (7, 7') relativ zueinander drehen,
wobei der Pin-Ring (1, 3) einen verformbaren Pin-Haltering (3) aufweist, wobei der Pin-Haltering (3) rillenförmige Vertiefungen (27) mit je einem Grund (33) aufweist, in den die Pins auf einer Seite lose eingesetzt sind, und wobei die Pins (1) an der gegenüberliegenden Seite auf einem Außenring (23) des flexiblen Kugellagers (2) aufliegen,
wobei das erste und das zweite Zahnradpaar in voneinander verschiedenen ersten und zweiten Ebenen angeordnet sind, wobei ein Transmitterträger mit einem Transmitter in einer dritten Ebene zwischen der Ebene des ersten Zahnradpaars und der Ebene des zweiten Zahnradpaars angeordnet ist,
wobei der Transmitterträger ein Rotor ist, dadurch gakennzeichet, dass
der Transmitter ein als sinusüberlagerte Kreisform ausgeformter Flansch ist, so dass eine sinusüberlagerte Kreisform als Laufbahn resultiert, wobei eine Mittelachse eines kleinen Kreises der sinusüberlagerten Kreisform mit Durchmesser gemäß dem halben Wert der Differenz aus einer großen Achse der sinusüberlagerten Kreisform minus einer kleinen Achse der sinusüberlagerten Kreisform auf der großen Kreisbahn des Mittelkreises zwischen den beiden Teilkreisen der Verzahnungen (5, 5', 6, 6') rotiert und sich dabei während eines Umlaufs um die Getriebemittelachse zweimal um seine eigene Achse dreht, und wobei die sinusüberlagerte Kreisform durch Projektion eines Punkts des kleinen Kreises und Ableiten einer Bahn daraus entsteht.

2. Harmonic-Pin-Ring Getriebe (10) gemäß Anspruch 1, wobei der Radius des Grunds im Wesentlichen gleich einem Radius der Pins (1) ist.

3. Harmonic-Pin-Ring Getriebe (10) gemäß Anspruch 1 oder Anspruch 2, wobei der Grund (33) ein halbkreisförmiges Profil hat.

4. Harmonic-Pin-Ring Getriebe gemäß (10) einem der vorher gehenden Ansprüche, wobei zwischen je zwei Gründen (33) der rillenförmigen Vertiefungen (27) längliche Erhebungen angeordnet sind.

5. Harmonic-Pin-Ring-Getriebe (10) gemäß Anspruch 4, wobei eine Höhe der länglichen Erhebungen ungefähr gleich einem Radius der Pins (1) ist.

6. Harmonic-Pin-Ring Getriebe (10) gemäß einem der vorhergehenden Ansprüche, wobei der Pin-Haltering (1, 3) einen inneren Bereich aufweist, der die rillenförmigen Vertiefungen (27) aufweist, und einen äußeren Bereich, der sich radial nach außen an den inneren Bereich anschließt.

7. Harmonic-Pin-Ring Getriebe (10) gemäß einem der vorhergehenden Ansprüche, wobei der Pin-Haltering (1, 3) zwei baugleiche Hälften (28, 29) aufweist.

8. Harmonic-Pin-Ring Getriebe (10) gemäß Anspruch 7, wobei die beiden baugleichen Hälften (28, 29) je einen inneren Bereich und einen äußeren Bereich aufweisen, wobei der innere Bereich die rillenförmigen Vertiefungen (27) aufweist und wobei sich der äußere Bereich radial nach außen an den inneren Bereich anschließt.

**Claims**

1. Harmonic pin ring transmission (10) comprising

    - a first gear pair with an inner ring (7, 7') with external toothing and an outer ring (8, 8') with internal toothing,
    - a second gear pair with an inner ring (7, 7') with external toothing and an outer ring (8, 8') with internal toothing,
    - a pin ring (1, 3) with pins (1) comprising a circular cross-section,
    - a rotor (13) with a transmitter (4, 4') for drawing the pins (1) of the pin ring (1, 3) into the teeth of the outer rings (8, 8') and into the teeth of the inner rings (7, 7'),
    - a flexible ball bearing (2) arranged in the radial direction between the transmitter (4, 4') and the pin ring (1, 3),
    wherein, for each gear pair, the inner ring (7, 7'), the rotor (13) and the outer ring (8, 8') are arranged concentrically with respect to one another,
    wherein the transmitter (4, 4') is arranged inside the pin ring (1, 3), wherein the pin ring (1, 3) is arranged between the inner ring (7, 7') and the outer ring (8, 8') for each gear pair, wherein the transmitter (4, 4') deforms the pin ring (1, 3) such that the outer ring (8, 8') and the inner ring (7, 7') rotate relative to each other,
    wherein the pin ring (1, 3) comprises a deformable pin retaining ring (3), wherein the pin retaining ring (3) comprises groove-shaped recesses (27), each with a base (33) into which the pins are loosely inserted on one side, and wherein the pins (1) rest on an outer ring (23) of the flexible ball bearing (2) on the opposite side, wherein the first and the second gear pair are arranged in first and second planes that are different from each other,
    wherein a transmitter carrier with a transmitter is arranged in a third plane between the plane of the first gear pair and the plane of the second gear pair,
    wherein the transmitter carrier is a rotor, **characterized in that**
    the transmitter is a flange shaped as a sinusoidally superimposed circular form, so that a sinusoidally superimposed circular form results as a raceway, wherein a central axis of a small circle of the sinusoidally superimposed circular form with a diameter corresponding to half the value of the difference between a major axis of the sinusoidally superimposed circular form and a minor axis of the sinusoidally superimposed circular form rotates on the large circular path of the central circle between the two pitch circles of the toothings (5, 5', 6, 6') and rotates twice around its own axis during one revolution around the central axis of the transmission, and wherein the sinusoidally superimposed circular form is created by projecting a point of the small circle and deriving a path therefrom.

2. Harmonic pin ring transmission (10) according to claim 1, wherein the radius of the base is substantially equal to a radius of the pins (1).

3. Harmonic pin ring transmission (10) according to claim 1 or claim 2, wherein the base (33) has a semicircular profile.

4. Harmonic pin ring transmission according to (10) one of the preceding claims, wherein elongated elevations are arranged between each two bases (33) of the groove-shaped recesses (27).

5. Harmonic pin ring transmission (10) according to claim 4, wherein a height of the elongated elevations is approximately equal to a radius of the pins (1).

6. Harmonic pin ring transmission (10) according to one of the preceding claims, wherein the pin retaining ring (1, 3) comprises an inner region comprising the groove-shaped recesses (27) and an outer region adjoining the inner region radially outwardly.

7. Harmonic pin ring transmission (10) according to one of the preceding claims, wherein the pin retaining ring (1, 3) comprises two identical halves (28, 29).

8. Harmonic pin ring transmission (10) according to claim 7, wherein the two identical halves (28, 29) each comprise an inner region and an outer region, wherein the inner region comprises the groove-shaped recesses (27) and wherein the outer region adjoins the inner region radially outwardly.

## Revendications

1. Engrenage harmonique à bague de broches (10) comprenant

- une première paire de roues dentées avec une bague intérieure (7, 7') avec une denture extérieure et une bague extérieure (8, 8') avec une denture intérieure,
- une deuxième paire de roues dentées avec une bague intérieure (7, 7') avec une denture extérieure et une bague extérieure (8, 8') avec une denture intérieure,
- une bague de broches (1, 3) avec des broches (1) qui comportent une section transversale circulaire,
- un rotor (13) avec un transmetteur (4, 4') pour racler les broches (1) de la bague de broches (1, 3) dans les dents des bagues extérieures (8, 8') et dans les dents des bagues intérieures (7, 7'),
- un roulement à billes flexible (2) disposé dans le sens radial entre le transmetteur (4, 4') et la bague de broches (1, 3),
dans lequel, pour chaque paire de roues dentées, la bague intérieure (7, 7'), le rotor (13) et la bague extérieure (8, 8') sont disposés de manière concentrique les uns par rapport aux autres,
dans lequel le transmetteur (4, 4') est disposé à l'intérieur de la bague de broches (1, 3), la bague de broches (1, 3) étant disposée, pour chaque paire de roues dentées, entre la bague intérieure (7, 7') et la bague extérieure (8, 8'),
le transmetteur (4, 4') déformant la bague de broches (1, 3) de telle sorte que la bague extérieure (8, 8') et la bague intérieure (7, 7') tournent l'une par rapport à l'autre,
dans lequel la bague de broches (1, 3) comporte une bague de retenue de broches déformable (3), la bague de retenue de broches (3) comportant des rainures (27) ayant chacune une base (33) dans lequel les broches sont insérées sans serrage d'un côté, et les broches (1) reposant, du côté opposé, sur une bague extérieure (23) du roulement à billes flexible (2),
dans lequel la première et la deuxième paire de roues dentées sont disposées dans des premier et deuxième plans distincts l'un de l'autre,
dans lequel un support de transmetteur avec un transmetteur est disposé dans un troisième plan entre le plan de la première paire de roues dentées et le plan de la deuxième paire de roues dentées,
dans lequel le support d'émetteur est un rotor, **caractérisé en ce que**
le transmetteur est une bride de forme circulaire superposée sinusoïdale, de sorte qu'il en résulte une forme circulaire superposée sinusoïdale comme trajectoire, une axe central d'un petit cercle de la forme circulaire superposée sinusoïdale ayant un diamètre correspondant à la moitié de la différence entre un grand axe de la forme circulaire superposée sinusoïdale et un petit axe de la forme circulaire superposée sinusoïdale tourne sur la grande trajectoire circulaire du cercle central entre les deux cercles partiels des dentures (5, 5', 6, 6') et effectue deux rotations autour de son propre axe au cours d'une révolution autour de l'axe central de l'engrenage, et la forme circulaire superposée sinusoïdale étant obtenue par projection d'un point du petit cercle et dérivation d'une trajectoire à partir de celui-ci.

2. Engrenage harmonique à bague de broches (10) selon la revendication 1, dans lequel le rayon de la base est sensiblement égal à un rayon des broches (1).

3. Engrenage harmonique à bague de broches (10) selon la revendication 1 ou la revendication 2, dans lequel la base (33) présente un profil semi-circulaire.

4. Engrenage harmonique à bague de broches selon (10) l'une des revendications précédentes, dans lequel des saillies allongées sont disposés entre chaque paire de bases (33) des rainures (27).

5. Engrenage harmonique à bague de broches (10) selon la revendication 4, dans lequel une hauteur des saillies allongées est approximativement égale à un rayon des broches (1).

6. Engrenage harmonique à bague de broches (10) selon l'une des revendications précédentes, dans lequel la bague de retenue de broches (1, 3) comporte une zone intérieure comportant les rainures (27) et une zone extérieure qui se raccorde radialement vers l'extérieur à la zone intérieure.

7. Engrenage harmonique à bague de broches (10) selon l'une des revendications précédentes, dans lequel la bague de retenue de broches (1, 3) comporte deux moitiés de construction identique (28, 29).

8. Engrenage harmonique à bague de broches (10) selon la revendication 7, dans lequel les deux moitiés de construction identique (28, 29) comportent chacune une zone intérieure et une zone extérieure, la zone intérieure comportant les rainures (27) et la zone extérieure se raccordant radialement vers l'extérieur à la zone intérieure.

Fig. 1

A-A ( 1:1 )

Fig. 3

Fig. 2

Fig. 4

2·b

2·a

11

4

~ 12

90°

Fig. 5

3

1

10

2

Fig. 6

Fig. 8

Fig. 7

Fig. 9

C-C

28

27

31

36

Fig. 12

B

30

28

27

32

31

Fig. 13

28

27

Fig. 10

C

C

B

28

Fig. 11

Fig. 14

Fig. 15

Fig. 16

D-D

EP 3 163 122 B1

Fig. 17

Fig. 18

Fig. 19

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 4032440 A
- WO 2012046216 A2